# EUROPEAN PATENT APPLICATION

(11) **EP 1 519 577 A1**
(43) Date of publication of application: **30.03.2005**
(21) Application number: 04251658.3
(22) Date of filing: 23.03.2004
(51) Int. Cl.: H04N 5/76

(54) **Contents recording and reproduction apparatus and contents reproduction method**

(30) Priority: 24.09.2003 JP 2003331093
(71) Applicant: D & M Holdings Inc., Sagamihara-shi, Kanagawa 228-8505 (JP)
(72) Inventor: Arai, Yuki, Hachiouji-shi Tokyo 192-0363 (JP)
(74) Representative: Hackney, Nigel John

(57) **Abstract**

There is provided a content recording and reproducing apparatus including: a recording and reproducing section (5) which records and reproduces content data; an operating section (6) which has keys allowing a user to input instructions for recording and reproducing of content data and for skipping during reproducing the content data; and a control section (8) that controls recording and reproducing of the content data in the recording and reproducing section (5) based upon instructions from the operating section (6). The control section (8) executes a second skipping based on a second skip instruction that is inputted within a predetermined time from a time at which the recording and reproducing section (5) re-starts reproduction of the content data after a first skipping based on a first skip instruction.

## Description

The present invention relates to a content recording and reproducing apparatus and a reproducing method for reproducing content data allowing desirable skipping.

A content recording and reproducing apparatus has been known generally. This apparatus receives content data such as broadcast signals for television broadcasts, etc., records this content data on a recording medium, and reproduces the recorded content data. In such content recording and reproducing apparatus, a skip function is generally provided. With this skip function, the user can reproduce the content data while skipping commercials included in the television broadcast programs by performing an operation using, for instance, a remote control when the content data is being reproduced. The image recording and reproducing apparatus disclosed in Japanese Patent Application Laid-Open (Kokai) No. 2002-152687 is one example of a device that has such a skip function.

In the image recording and reproducing apparatus disclosed in this Japanese Patent Application Laid-Open (Kokai) No. 2002-152687, the time delay (e.g., three seconds) from the beginning of a commercial to the point at which the user takes the remote control in his/her hand and presses the skip key is taken into account, and skipping is performed for a first specified time (e.g., twelve seconds) in the case of the pressing of the skip key for the first time, so that the possibility of missing the head part of the program following the completion of the commercial is reduced.

In cases where the skip key is consecutively pressed two or more times, i.e., in cases where the skip key is pressed and then pressed again before the video image is displayed on the screen, skipping is performed for a second specified time (e.g., 15 seconds) which is longer than the first specified time.

Furthermore, in the pressing of the skip key from the second time onward, the pressing of the key by the user after the video image has been displayed on the screen for a short time (e.g., one (1) second, two (2) seconds or three (3) seconds) following skipping is taken into account; and in cases where the skip key is pressed again within a fixed time (e.g., three seconds) from the time point at which the skip key was previously pressed, skipping is performed for a third specified time (e.g., 14 seconds).

In the image recording and reproducing apparatus disclosed in the above Japanese Patent Application Laid-Open (Kokai) No. 2002-152687, a skipping action is performed with reference to the time point at which the skip key is pressed when skipping is performed. In cases where the pressing of the skip key by the user is performed at a time point that is out of the above-described fixed time (e.g., three seconds) from the time point of the previous pressing of the skip key, skipping is performed for a first specified time (e.g., twelve seconds) with reference to the time point at which the skipping key is pressed. Accordingly, in cases where the user repeats a similar pressing action of the skip key, the time point of the skipped position gradually shifts to a time point that is later than the correct time point (a time point that is just after a multiple of commercial times (e.g., 15 seconds, 30 seconds, etc.)).

It is assumed, for example, that in the broadcast signal (content data) that is recorded in the image recording and reproducing apparatus, that the time point of the head of this content data is 00 hours 00 minutes 00 seconds, that the content data during the time from 00 hours 00 minutes 00 seconds to 00 hours 14 minutes 59 seconds constitutes a part of a program, that the content data during the time from 00 hours 15 minutes 00 seconds to 00 hours 16 minutes 30 seconds constitutes a commercial, and that the program starts again from 00 hours 16 minutes 31 seconds.

When it is further assumed that the user presses the skip key for the first time at 00 hours 15 minutes 02 seconds, and subsequently repeats the action of pressing the skip key for four (4) seconds after reproduction has been re-started following skipping. In this case, the time points at which reproduction is re-started following skipping are 00 hours 15 minutes 14 seconds, 00 hours 15 minutes 30 seconds, 00 hours 15 minutes 46 seconds, 00 hours 16 minutes 02 seconds, 00 hours 16 minutes 18 seconds, 00 hours 16 minutes 34 seconds and so on, so that these time points gradually shift to time points that are later than the correct time points (time points that are just after multiples of 15 seconds or 30 seconds from the head time point) by one second, two seconds, three seconds, four seconds and so on. In this example, in a case where the program starts again from 00 hours 16 minutes 30 seconds, the program will be missed for four seconds.

Thus, in cases where the time from the time point of the previous pressing of the skip key to the time point of the next pressing of the skip key is longer than the above-described fixed time (e.g., three seconds), the time point at which reproduction is re-started following skipping shifts from the correct time point as the number of times that skipping is performed increases due to the repeated pressing of the skip key, and this shifted time gradually becomes longer in proportion to the number of times that skipping is performed. As a result, the following problem arises: namely, in cases where the user misses the head of the program as a result of the skipping action, the time that is required to return to the head of the program becomes longer as the number of times that skipping is performed increases.

Furthermore, in the image recording and reproducing apparatus disclosed in Japanese Patent Application Laid-Open (Kokai) No. 2002-152687, in cases where a skipping action is performed with reference to the time point at which the skip key is pressed when skipping is performed, and the operation of pressing the skip key is repeated immediately after the skipping by the previous pressing of the skip key is completed, a skipping action for a third specified time (e.g., 14 seconds) is repeated with reference to the time point at which the skip key was pressed. As a result, in cases where the user repeats a similar operation of pressing the skip key, the time point after skipping gradually shifts to a time point that is earlier than the correct time point (i.e., a time point that is just after a multiple of 15 seconds or 30 seconds from the head of the content).

It is assumed, for example, that in the content data that is recorded in the image recording and reproducing apparatus, the time point of the head of the content data is 00 hours 00 minutes 00 seconds, that the content data during the time from 00 hours 00 minutes 00 seconds to 00 hours 14 minutes 59 seconds constitutes a part of a program, that the content data during the time from 00 hours 15 minutes 00 seconds to 00 hours 16 minutes 30 seconds constitutes a commercial, and that the program starts again from 00 hours 16 minutes 31 seconds.

When it is further assumed that the user presses the skip key at 00 hours 15 minutes 02 seconds, and repeats the operation of pressing the skip key immediately after skipping is completed. In this case, skipping is performed so that the time point of skipping is 00 hours 15 minutes 16 seconds, 00 hours 15 minutes 30 seconds, 00 hours 15 minutes 44 seconds, 00 hours 15 minutes 58 seconds, 00 hours 16 minutes 13 seconds, 00 hours 16 minutes 27 seconds and so on; thus, these time points shift to time points that are earlier than the correct time points (time points that are just after a multiple of 15 seconds or 30 seconds from the head time point) by one second, two seconds, three seconds and so on. In this example, in a case where the program starts again from 00 hours 16 minutes 30 seconds, the program will be seen after the commercial preceding the program is viewed for three seconds.

Thus, as the number of times that skipping is performed as a result of repeating the operation of pressing the skip key immediately following skipping increases, the time point at which reproduction is re-started following skipping shifts from the correct time point, and this shifted time gradually becomes longer in proportion to the number of times that skipping is performed. Accordingly, the some problems arise. Even in cases where the user skips a commercial by pressing the skip key, the time for which the commercial is viewed before the program is re-started becomes longer as the number of times that skipping is performed increases, so that the time required in order to fast-forward the commercial part until the program is re-started becomes longer.

Furthermore, in the image recording and reproducing apparatus of Japanese Patent Application Laid-Open (Kokai) No. 2002-152687, when a recorded program is reproduced, and this program is then re-started for a second time, the user must perform a skipping operation by pressing the skip key with reference to the time of the commercial, and the timing of the pressing of the skip key and number of time that the skip key was pressed, during the previous reproduction. Accordingly, the following problem arises: namely, each time that a recorded program is reproduced, a skipping operation similar to the skipping operation that was performed during the previous reproduction must be performed, which is bothersome.

In view of the above situations, the present invention helps to provide a content recording and reproducing apparatus and a reproducing method enabling to shorten the time (shifted time) between the time point at which reproduction is re-started following skipping and the correct time point (a time point that is just after a multiple of a predetermined time for a commercial from re-starting a program) even in cases where the number of times that skipping is performed is increased as a result of the repeated pressing of the skip key by the user.

The present invention further helps to provide a content recording and reproducing apparatus and a reproducing method allowing to eliminate bothersome nature of the skipping operation in cases where a content data is reproduced from the second time onward.

These are accomplished by various embodiments of the invention. According to the first aspect of the invention, there is provided a content recording and reproducing apparatus including: a receiving section (1) which receives content data transmitted via wire or wireless transmission; a recording and reproducing section (5) which records the content data received by the receiving section (1) on a recording medium and reproduces the content data recorded on the recording medium; an operating section (6) which has keys allowing a user to input instructions for recording and reproducing of content data and for skipping during reproducing the content data; and a control section (8) that controls recording and reproducing of the content data in the recording and reproducing section (5) based upon instructions from the operating section (6), characterized in that
the control section (8) includes:
a skip information memory section (8a) which stores a skip reference time point indicating a time point at which the recording and reproducing section (5) re-starts reproduction of the content data after skipping; and
a skip amount setting section (8b) which sets an amount of skipping based upon a time point at which the key for skipping is pressed, the skip amount setting section (8b) executing a skip for a first skip time from the skip reference time point when the key for skipping is pressed within a predetermined time from the skip reference time point, and a skip for a second skip time shorter than the first skip time from the skip reference time point when the key for skipping is pressed out of the predetermined time from the skip reference time point.

In above, the skip information memory section (8a) may further store a skip period which indicates a period within which skipping is continuously executed for the content data in accordance with successive pressing of the skip key; and
in a case where the recording and reproducing section (5) reproduces a content data once reproduced, the skip amount setting section (8b) may execute a skip for whole of the skip period stored in the skip information memory section (8a) when the key for skipping is pressed at least one time within the skip period.

In above, the skip information memory section (8a) may further store a skip period which indicates a period within which skipping is continuously executed for the content data in accordance with successive pressing of the skip key; and
in a case where the recording and reproducing section (5) reproduces a content data once reproduced, the skip amount setting section (8b) may execute a skip for whole of the skip period stored in the skip information memory section (8a) automatically.

According to the second aspect of the invention, there is provided a content recording and reproducing apparatus including: a recording and reproducing section (5) which records and reproduces content data; an operating section (6) which has keys allowing a user to input instructions for recording and reproducing of content data and for skipping during reproducing the content data; and a control section (8) that controls recording and reproducing of the content data in the recording and reproducing section (5) based upon instructions from the operating section (6), characterized in that
the control section (8) executes a second skipping based on a second skip instruction that is inputted within a predetermined time from a time at which the recording and reproducing section re-starts reproduction of the content data after a first skipping based on a first skip instruction.

In above, the control section (8) may execute skipping shorter than the second skipping based on the second skip instruction that is inputted out of the predetermined time from the time at which the recording and reproducing section (5) re-starts reproduction of the content data after a first skipping based on a first skip instruction.

In above, the control section (8) may include a skip information memory (8a) stores a skip period which indicates a period within which skipping is continuously executed for the content data in accordance with successive skip instructions, and
in a case where the recording and reproducing section (5) reproduces a content data once reproduced, the control section (8) may execute a skip for whole of the skip period stored in the skip information memory section (8a) when the skip instruction is inputted at least one time within the skip period.

In above, the control section (8) may include a skip information memory (8a) stores a skip period which indicates a period within which skipping is continuously executed for the content data in accordance with successive skip instructions, and
in a case where the recording and reproducing section (5) reproduces a content data once reproduced, the control section (8) may execute a skip for whole of the skip period stored in the skip information memory (8a) section automatically.

In above, the skip information memory (8a) may store at least a start time point and an end time point.

In above, the skip period stored in the skip information memory (8a) may optionally be edited by a user.

According to the third aspect of the invention, there is provided a content reproducing method for reproducing a content data, characterized by further including:
skipping a first skip time based on a first skip instruction received;
re-starting reproduction of the content data after the first skip time; and
skipping a second skip time, when received a second instruction within a predetermined period from a time at which the reproduction is re-started.

In above, the first skip time and the second skip time may be equal.

The method above may include skipping a skip time shorter than the second skip time in stead of skipping the second skip time, when received a second instruction within a predetermined period from a time at which the reproduction is re-started.

The method above may include
storing a skip period which indicates a period within which skipping is continuously executed for the content data in accordance with successive skip instructions, and
skipping whole of the skip period stored when the skip instruction is inputted at least one time within the skip period, in case of reproducing a content data once reproduced.

The method above may include
storing a skip period which indicates a period within which skipping is continuously executed for the content data in accordance with successive skip instructions, and skipping whole of the skip period stored automatically, in case of reproducing a content data once reproduced.

The method above may include storing at least a start time point and an end time point of the skip period in the storing.

The method above may include allowing a user to edit the skip period stored.

In the present invention, even if the operation of the skip key is repeated so that the number of times that skipping is performed increases, there is no lengthening of the time between the time point at which reproduction is re-started following skipping and the correct time point at which the program is to be reproduced, thereby the time required for re-starting the reproduction of the program is short.

Furthermore, in cases where content data that has been once reproduced is reproduced for a second time, reproduction is performed with the commercial part being automatically skipped based upon the operation content for the skip key during the previous reproduction. Accordingly, there is no bothersome skip key operation.

The invention will now be described by way of example with reference to the accompanying drawings, throughout which like parts are referred to by like references, and in which:
Figure 1 is a diagram that shows a schematic construction of one embodiment of the content recording and reproducing apparatus according to the present invention;
Figure 2 is a flow chart illustrating the skip operation that is performed when the content data is initially reproduced in the content recording and reproducing apparatus of the shown embodiment;
Figure 3 is a diagram that illustrates the skip process in the content recording and reproducing apparatus of the shown embodiment;
Figure 4 is a diagram that illustrates one example of the skip information in the content recording and reproducing apparatus of the shown embodiment;
Figure 5 is a diagram that illustrates one example of the skip states in the content recording and reproducing apparatus of the shown embodiment; and
Figure 6 is a flow chart illustrating the skip process during the reproduction of the content data from the second time onward in the content recording and reproducing apparatus of the shown embodiment.

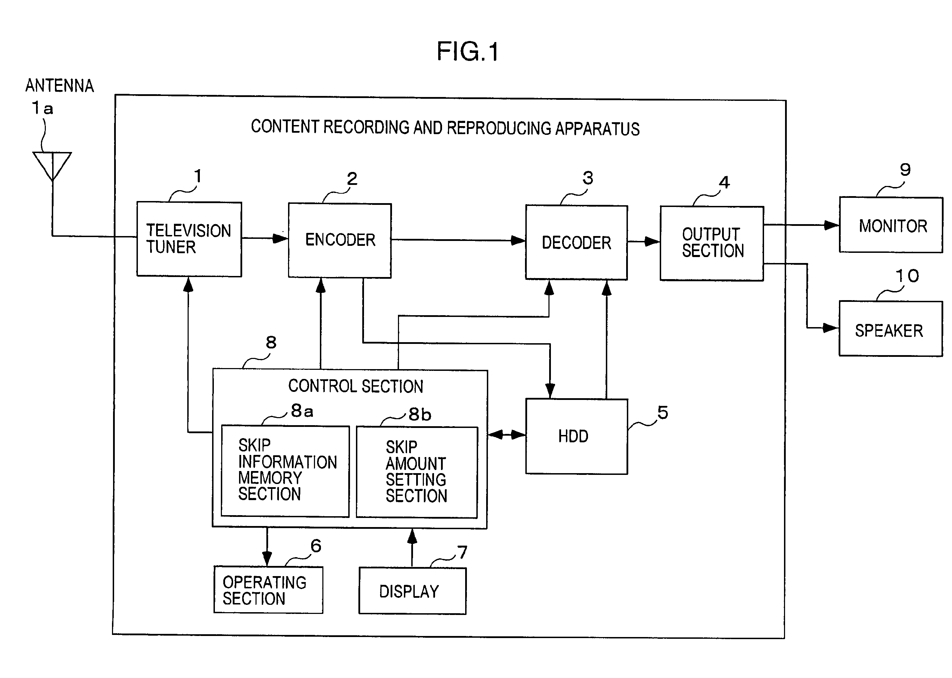

Figure 1 shows in schematic the construction of one embodiment of a content recording and reproducing apparatus of the present invention.

The content recording and reproducing apparatus of the present invention includes a television tuner 1, an encoder 2, a decoder 3, an output section 4, a hard disk drive (hereafter refer to as an "HDD") 5, an operating section 6, a display 7 and a control section 8. A monitor 9 which is used to display video images, and a speaker 10 which is used for audio output, are connected to the content recording and reproducing apparatus.

In the shown embodiment, the "content data" is made of signals (image signals, audio signals, etc.) that are transmitted via wire or wireless transmission. The "content data" includes programs (dramas, news programs, musical programs, etc.) for television broadcasts, and commercials that are broadcasted during these programs.

The television tuner 1 extracts, by the control of the control section 8 (described later), signals with a specified carrier wave frequency from electromagnetic waves received by antenna 1a, demodulates these signals, and outputs analog image signals and analog audio signals to the encoder 2.

The encoder 2 converts the analog video signals inputted from the television tuner 1 into digital video data such as MPEG (Moving Picture Experts Group) 1, MPEG 2, etc. The encoder 2 also converts the analog audio signals inputted from the television tuner 1 into digital audio data such as MPEG, linear PCM (pulse code modulation), etc. The video data and audio data are outputted to the HDD 5 or decoder 3 as content data by the control of the control section 8 (described later).

The decoder 3 separates the content data inputted from the HDD 5 (described later) or encoder 2 into video data and audio data, decodes the respective types of data, and outputs these data to the output section 4.

The output section 4 includes a digital interface (not shown) and a digital-analog converter (not shown). The digital interface outputs the video data and audio data inputted from the decoder 3 to the monitor 9 or the loud speaker 10 as digital signals. The digital-analog converter outputs the video data and audio data inputted from the decoder 3 to the monitor 9 or the loud speaker 10 as analog signals.

The HDD 5 records, by the control (described later) of the control section 8, the video data and audio data inputted from the encoder 2 on its recording medium. Furthermore, by the control (described later) of the control section 8, the HDD 5 reads out video data and audio data recorded on the recording medium and outputs these data to the decoder 3. In addition, the HDD 5 records information relating to the content data (name of content data, time of initiation of recording, time of completion of recording, reproduction time, program name, etc.).

The operating section 6 includes operation keys such as a "station selection" key for selecting the station that is received in the television tuner, a "reproduction start" key and "reproduction stop" key for starting and stopping reproducing the content data recorded in the HDD 5, and a "skip" key for skipping commercial parts, etc. Based upon the pressing of the operation keys by the user, the operating section 6 outputs an instruction signal relating to the operation key that is pressed, to the control section 8.

The display 7 shows, by the control of the control section 8, the name or number of the station that is receiving, the reproduction state of the content data (under reproduction, reproduction stopped, etc.), and the information relating to the content data recorded in the HDD 5 (reproduction time, program name, etc.).

The control section 8 includes a ROM (read-only memory) (not shown) in which a control program used to control the operation of the device is written, a RAM (random access memory) (not shown) which has a temporary memory storage region required for execution of the program, a skip information memory section 8a which stores skip information such as the time point at which the skip key is pressed, and a skip amount setting section 8b which controls the amount of skipping in accordance with the pressing of the skip key. The control section 8 comprehensively controls the content recording and reproducing apparatus as a whole.

The skip information memory section 8a of the control section 8 stores skip information including the time point at which the skip key is pressed (skip key pressing time point) for content data that is currently being reproduced and the reproduction starting time point (skip reference time point) at which the reproduction of the content data is re-started following skipping, together with content information that specifies the content data that is currently being reproduced. Before an initial pressing of the skip key after starting reproducing of the content data, the time point for the head of the content data is stored as the skip reference time point.

The skip amount setting section 8b of the control section 8 refers to the skip reference time point and the skip key pressing time point, to determine the time from the skip reference time point to the pressing of the skip key. The skip amount setting section 8b sets a time period for which skipping is performed (a skip time) according to whether or not the determined time is over a preset time, thereby controlling the skipping operation.

Generally, the running time of one commercial that is broadcasted during a program is a time period corresponding to a multiple of 15 seconds or 30 seconds. Accordingly, when a time of 16 seconds or longer or 31 seconds or longer has elapsed since the start of one commercial, then the next commercial or the program begins. Thus, at most the time for one commercial (15 seconds or 30 seconds) is sufficient for a user to judge whether or not to skip the commercial that is currently being reproduced. Accordingly, the above described "preset time" is set at 15 seconds or 30 seconds from the skip reference time point. In the shown embodiment, this "preset time" is set at 15 seconds.

The skip amount setting section 8b of the control section 8 sets a first skip time and sets a second skip time. The first skip time is set in cases where a preset time has elapsed from the skip reference time point to a time point when the skip key is pressed. The second skip time is set in cases where the time from the skip reference time point to a time point when the skip key is pressed is within this preset time (first skip time < second skip time, in length).

The first skip time is a time that takes into account an approximate time from a time point at which a user recognizes a commercial (and picks up the remote control) to a time point at which the user presses the skip key (three seconds in this embodiment, but not limited thereto). In the shown embodiment, this first skip time is set at twelve seconds.

The skip amount setting section 8b determines the time from the skip reference time point to the time point of at which the skip key is pressed. In cases where this determined time exceeds the above-described preset time (e.g., 16 seconds, 17 seconds, etc.), i.e., in cases where a time of one second, two seconds, etc. has elapsed since the beginning of the next commercial, the skip amount setting section 8b sets the first skip time (twelve seconds) as the skip time. In cases where the skip key is pressed after the preset time (15 seconds) has elapsed from the skip reference time point, skipping is performed for the first skip time (twelve seconds) from the time point of pressing the skip key during reproduction.

The second skip time is a skip time used in cases where the user views the content data whose reproduction has been re-started following skipping, judges that the part of the content data reproduced is a commercial, and presses the skip key. This is set at 15 seconds or 30 seconds that correspond to the commercial time. In the shown embodiment, the second skip time is set at 15 seconds.

The skip amount setting section 8b determines the time from the skip reference time point to the time point of pressing the skip key, and sets the second skip time (15 seconds) as the skip time in cases where the determined time is within the above-described preset time (15 seconds). As a result, in cases where the time point of pressing the skip key is within the preset time (15 seconds) from the skip reference position, skipping is carried out for the second skip time (15 seconds) from the skip reference position.

Next, the operation of the content recording and reproducing apparatus will be described.

When the television broadcast to be received is selected via the operation of the operating section 6 by the user, and instructed to start recording of the broadcast signal, then the television tuner 1 extracts, by the control of the control section 8, the selected broadcast signal from the signals received by the antenna 1a and outputs an analog video signal and analog audio signal to the encoder 2.

The encoder 2 encodes the analog video signal and analog audio signal outputted from the television tuner 1 and outputs these encoded signals as content data to the HDD 5. The HDD 5 records the content data inputted from the encoder 2.

When received an instruction from the operating section 6 to start reproduction of the content data recorded in the HDD 5, the control section 8 reads out the data recorded in the HDD 5, and this data is decoded by the decoder 3. Of the decoded content data, the video signal is outputted to the monitor 9, and the audio signal is outputted to the speaker 10, by the output section 4.

In the shown embodiment, the content data outputted from the encoder is temporarily recorded in the HDD 5, and the content data recorded in the HDD 5 is read out and reproduced according to instructions by the user. However, the present invention is not limited to this. The content recording and reproducing apparatus of the present invention may be constructed such that the content data received by the television tuner 1 and encoded by the encoder 2 is recorded in the HDD 5, and the content data encoded by the encoder 2 is decoded by the decoder 3 and outputted from the output section 4. In other words, in the content recording and reproducing apparatus of the present invention, the received broadcast signal may be recorded in the HDD 5, and the content data recorded in the HDD 5 may be reproduced, or the received broadcast signal may be recorded in the HDD 5, and the content data may be outputted to the monitor 9 and speaker 10 in real time.

Next, the skip operation in the content recording and reproducing apparatus of the shown embodiment will be described.

First, the skip operation in a case where the content data recorded in the HDD 5 is initially reproduced will be described.

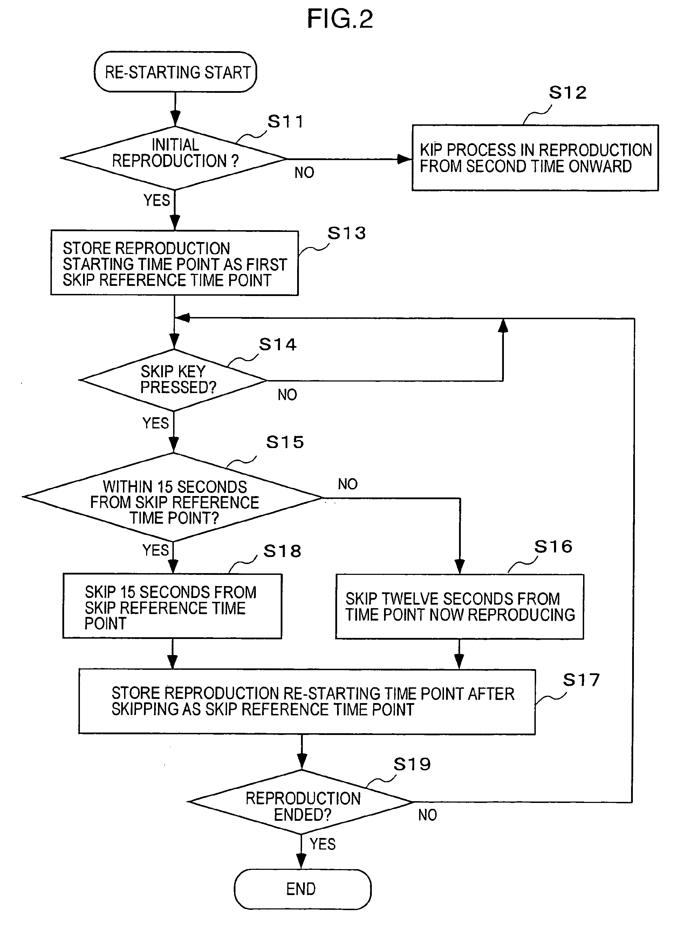

Figure 2 is a flow that illustrates the skip operation performed in cases where the content data is initially reproduced in the content recording and reproducing apparatus of the shown embodiment.

The content recording and reproducing apparatus records the broadcast signal, which is received by the television tuner 1, in the HDD 5 as content data.

Then, when instructed via the operating section 6 to start reproduction of the content data recorded in the HDD 5, the HDD 5 reads out the designated content data by the control of the control section 8. The read-out content data is decoded by the decoder 3 and is outputted to the monitor 9 and speaker 10 from the output section 4. The skip operation is an operation that is performed during this reproduction.

When received an instruction from the operating section 6 to start reproduction, the control section 8 detects the information, which specifies the content data that is recorded in the HDD 5, and the skip information, which is recorded in the skip information memory section 8a; and the control section 8 determines whether or not this content data is being reproduced for the first time since recorded (S11). In other words, in cases where there is stored no skip information relating to this content data in the skip information memory section 8a, the control section 8 determines that this content data is being reproduced for the first time; and in cases where there is stored the skip information in the skip information memory section 8a, the control section 8 determines that this content data is being reproduced for the second time or a further time.

In a case where the content data is not being reproduced for the first time since recorded, i.e., in cases where this content data is being reproduced for the second or a further time, the skip process in the case of reproduction for the second time onward is carried out (S12).

In a case where the content data is being reproduced for the first time since recorded, the control section 8 stores the time point when received an instruction for starting reproduction from the operating section 6 in the skip information memory section 8a as the first skip reference time point for this content data (S13).

During the reproduction of the content data, the control section 8 monitors whether or not the skip key of the operating section 6 is pressed (S14).

In a case where the skip key is pressed, the control section 8 determines whether or not the current pressing of the skip key was performed within 15 seconds from the first skip reference time point (S15).

In a case where the current pressing of the skip key is not performed within 15 seconds from the first (previous) skip reference time point, the reproduction of this content data is skipped for twelve seconds from the time point when the skip key is pressed (S16). Then, the time point when reproduction is re-started after the skipping is stored in the skip information memory section 8a as the second skip reference time point (S17).

In a case where the current pressing of the skip key is performed within 15 seconds from the first skip reference time point, a skip of 15 seconds is performed from this skip reference time point (S18). Then, the time point when re-starting reproduction after the skipping is stored in the skip information memory section 8a as the second skip reference time point (S17).

The control section 8 determines whether or not there received an instruction to stop reproduction from the operating section 6 (S19). When received an instruction to stop reproduction, the control section 8 stops reproduction. Or when not received the instruction to stop reproduction, the process returns to step 14 (S14), and the process from step 14 (S14) to step 19 (S19) is repeated.

Next, the above-described skip operation will be described below more concretely.

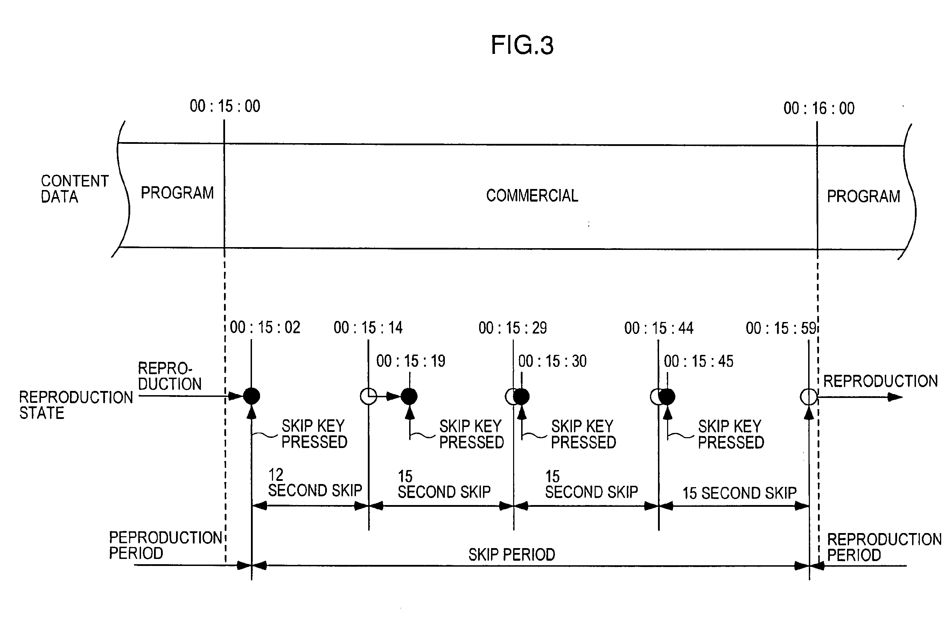

Figure 3 is a diagram that shows the skip operation in the content recording and reproducing apparatus of the shown embodiment.

Here, a case will be described in which the time point of the head of the content data is set at 00 hours 00 minutes 00 seconds, and which a one-minute commercial is reproduced after 15 minutes has elapsed from the time point of the head of the content data.

When a user presses the skip key at 00 hours 15 minutes 02 seconds after the time of 00 hours 15 minutes 00 seconds has elapsed, a skip for twelve seconds (the first skip time) is performed from the time point now reproducing (00 hours 15 minutes 02 seconds) and then reproduction of the content data is started again from 00 hours 15 minutes 14 seconds, since this pressing of the skip key is the first pressing of the skip key (i.e., since a time of 15 seconds has elapsed from the first skip reference time point (the time point of the head of the content data)). This time point of 00 hours 15 minutes 14 seconds is stored in the skip information memory section 8a as the second skip reference time point.

Subsequently, in a case where the user view the video image for five (5) seconds and again presses the skip key at 00 hours 15 minutes 19 seconds, a skip for 15 seconds (the second skip time) is performed from the second skip reference time point (00 hours 15 minutes 14 seconds) and then the reproduction of the content data is re-started from 00 hours 15 minutes 29 seconds, since this pressing of the skip key is performed within 15 seconds from the second skip reference time point (00 hours 15 minutes 14 seconds). The time point of 00 hours 15 minutes 29 seconds is stored in the skip information memory section 8a as the third skip reference time point.

Subsequently, in a case where the user views the video image for one second, and then again presses the skip key at 00 hours 15 minutes 30 seconds, a skip for 15 seconds (the second skip time) is performed from the third skip reference time point (00 hours 15 minutes 29 seconds) and then the reproduction of the content data is re-started from 00 hours 15 minutes 44 seconds, since this pressing of the skip key is performed within 15 seconds from the third skip reference time point (00 hours 15 minutes 29 seconds). The time point of 00 hours 15 minutes 44 seconds is stored in the skip information memory section 8a as the fourth skip reference time point.

Subsequently, in a case where the user views the video image for one second, and then again presses the skip key at 00 hours 15 minutes 45 seconds, a skip for 15 seconds (the second skip time) is performed from the fourth skip reference time point (00 hours 15 minutes 44 seconds) and then the reproduction of the content data is re-started from 00 hours 15 minutes 59 seconds, since this pressing of the skip key is performed within 15 seconds from the fourth skip reference time point (00 hours 15 minutes 44 seconds). The time point of 00 hours 15 minutes 59 seconds is stored in the skip information memory section 8a as the skip reference time point in the fifth skip operation. Then, since the program starts again from 00 hours 16 minutes 00 seconds, the user ends the skip operation.

As will be described later, the period of time from the time point of the first pressing the skip key (00 hours 15 minutes 02 seconds) to the time point at which reproduction is re-started after skipping as a result of the fourth pressing the skip key (00 hours 15 minutes 59 seconds) is stored as a skip period in the skip information memory section 8a.

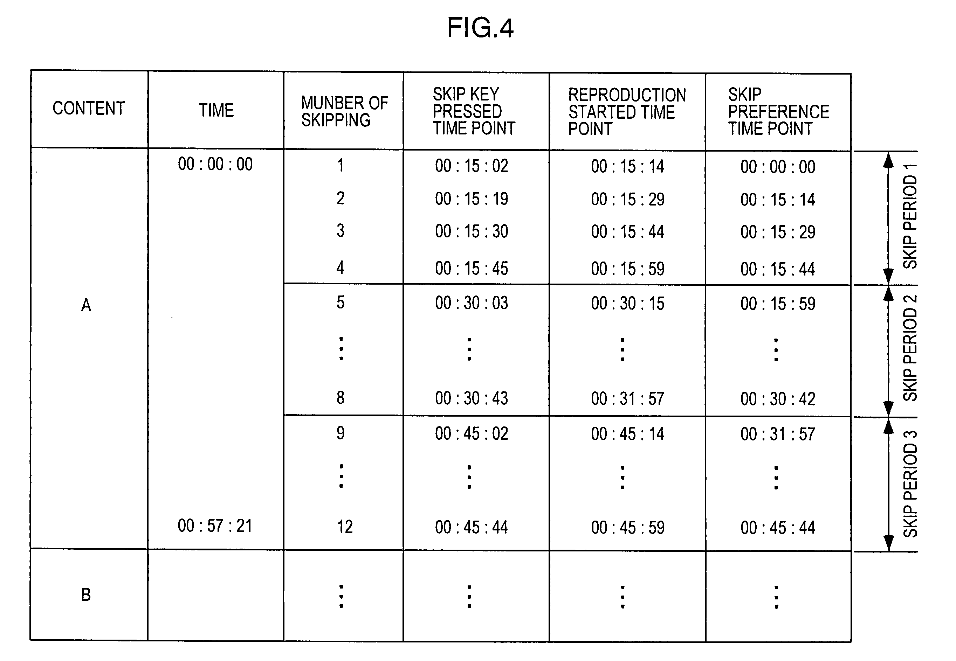

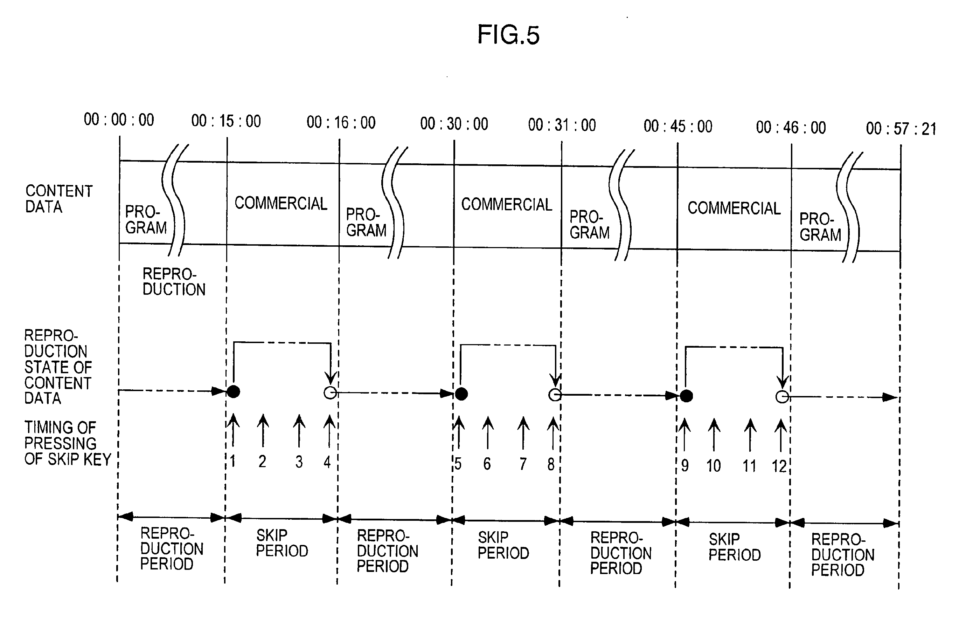

Figure 4 illustrates one example of the skip information in the content recording and reproducing apparatus of the shown embodiment. Figure 5 illustrates one example of a skipped state in the content recording and reproducing apparatus of the shown embodiment.

As a result of the repetition of the above-described skip operation, the skip information shown in Figure 4 is stored in the skip information memory section 8a. In Figure 4, the content data "A" is the data extending from 00 hours 00 minutes 00 seconds to 00 hours 57 minutes 21 seconds; within this data, the skip key is pressed 12 times. The skipped state based on the skip information shown in Figure 4 is as shown in Figure 5.

The first pressing of the skip key is performed at 00 hours 15 minutes 02 seconds, and the fourth pressing of the skip key is performed at 00 hours, 15 minutes 45 seconds; following the fourth skip operation, reproduction is started again from 00 hours 15 minutes 59 seconds. Likewise, the fifth pressing of the skip key is performed at 00 hours 30 minutes 03 seconds, the eighth pressing of the skip key is performed at 00 hours 30 minutes 43 seconds, and reproduction is started again from 00 hours 30 minutes 57 seconds after the eighth skip operation. Furthermore, the ninth pressing of the skip key is performed at 00 hours 45 minutes 02 seconds, the twelfth pressing of the skip key is performed at 00 hours 45 minutes 44 seconds, and reproduction is started again from 00 hours 45 minutes 59 seconds after the twelfth skip operation.

After the initial reproduction of the content data is stopped, the control section 8 refers to the skip information for this content data that is stored in the skip information memory section 8a. In a case where reproduction is continuously performed for a time that is equal to or greater than a preset time (e.g., 2 minutes, etc.) after reproduction of the content data is re-started following skipping (i.e., in a case where the skip key is not pressed), the control section 8 sets the period for which a skip operation is continuously performed prior to the re-starting of this reproduction as the skip period.

For example, in Figure 4, the period of time from the first skip key pressing time point (00 hours 15 minutes 02 seconds) to the time point at which reproduction starts again in accordance with the fourth skip operation (00 hours 15 minutes 59 seconds) corresponds to the skip period 1. The period of time from the fifth skip key pressing time point (00 hours 30 minutes 03 seconds) to the time point at which reproduction starts again in accordance with the eighth skip operation (00 hours 30 minutes 57 seconds) corresponds to the skip period 2. The period of time from the ninth skip key pressing time point (00 hours 45 minutes 02 seconds) to the time point at which reproduction starts again in accordance with the twelfth skip operation (00 hours 45 minutes 59 seconds) corresponds to the skip period 3. Information for these skip periods is stored in the skip information memory section 8a.

As seen from the above, in the initial reproduction of the content data recorded in the HDD 5, in a case where pressing of the skip key is not performed within 15 seconds from the skip reference time point based on the previous pressing of the skip key, skipping is performed for twelve seconds from the time point now reproducing. Alternately, in a case where pressing of the skip key is performed within 15 seconds from the skip reference position based on the previous pressing of the skip key, skipping is performed for 15 seconds.

In the skip operation performed in the content recording and reproducing apparatus of the embodiment above, the time point at which reproduction is re-started as a result of the operation in the previous skipping is set as the skip reference time point; and while in a case where the skip key is pressed, skipping is performed from this skip reference time point. Accordingly, when initially reproducing the content data, in skip operations from the second time onward, there is no lengthening of the time between the time point at which reproduction of the content data is re-started following skipping and the skip reference time point (i.e., the time point at which reproduction of the content data is re-started in accordance with the previous skip operation) in proportion to the repetition number of times that skipping is performed, even if the timing at which the skip key is pressed is different with each pressing of the skip key.

Accordingly, even if the repetition number of times that skipping is performed increases, the time between the time point at which reproduction of the content data following skipping is re-started following skipping and the correct time point (i.e., a time point that is just after a multiple of 15 seconds or 30 seconds since the previous reproduction) is constant. Thus, even if the number of times that skipping is performed is increased accompanied with repeated pressing of the skip key, there occurs no increase in the shifted time between the time point at which the reproduction of the content data is re-started after skipping and the correct time point. Accordingly, the fast-forward or fast-rewind time required for adjusting this shifted time is possible in a short time. In particular, in a case where the time required for the user to recognize a commercial, pick up the remote control and press the skip key after such a commercial begins is three seconds, the skip is always carried out for a time that is a multiple of 15 seconds or 30 seconds even if the number of times that skipping is performed increases, thereby the program can be viewed after viewing the commercial for a short time, or there may occur no missing of the head of the program.

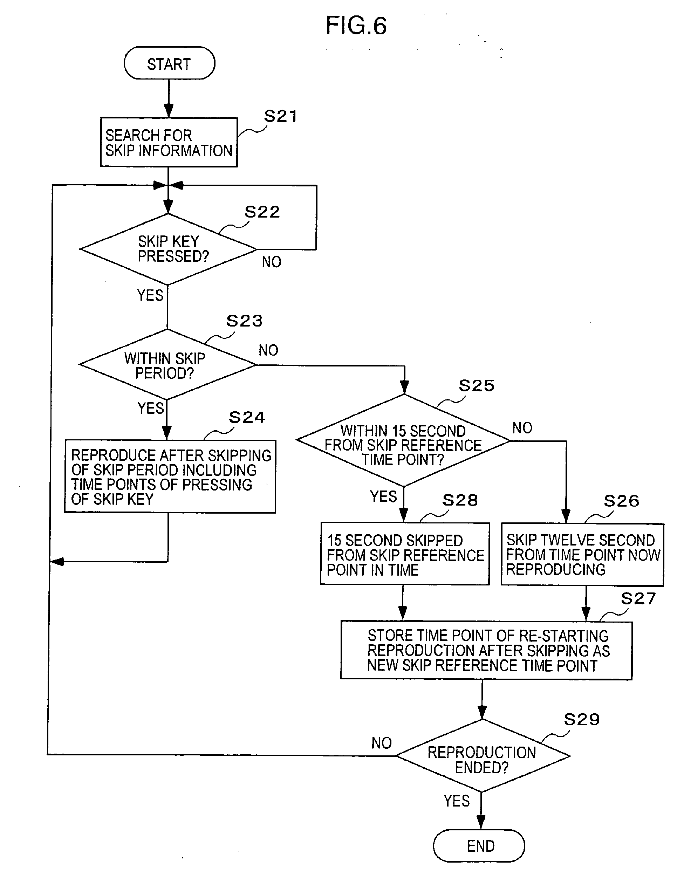

Next, the skip operation in a case where the content data recorded in the HDD 5 is reproduced for a second time or further time after a skip operation (pressing of the skip key by the user, i.e., skipping of the content data) has been performed in the initial reproduction of the content data as described above will be described. Figure 6, a flow chart, shows the skip operation during reproduction of the content data from the second time onward (i.e., the content data once reproduced) in the content recording and reproducing apparatus of the shown embodiment.

The content recording and reproducing apparatus records the broadcast signal received by the television tuner 1 in the HDD 5 as content data. Then, when receiving an initial instruction from the operating section 6 to start reproduction of the content data recorded in the HDD 5, the control section 8 detects information specifying this content data recorded in the HDD 5 and skip information stored in the skip information memory section 8a, and determines whether or not this content data is being reproduced for the first time since recorded, as shown in step 11 (S11) in Figure 2.

In a case where this content data is not being reproduced for the first time since recorded (S11), the control section 8 determines that the content data is being reproduced for the second time or a further time, and executes the skip process that is performed in reproduction from the second time onward as shown in Figure 5 (S12).

In Figure 6, the control section 8 searches for skip information for the above-described content data that is stored in the skip information memory section 8a (S21). The skip information for the content data is the skip information shown in Figure 4.

During the reproduction of the content data, the control section 8 monitors whether or not the skip key of the operating section 6 is pressed (S22).

If the skip key is pressed, the control section 8 determines whether or not the current pressing of the skip key is performed within the skip period specified by the skip operation performed during the initial reproduction of the content data (S23).

In a case where the current pressing of the skip key is performed within the skip period of the content data, the skip is performed for a skip period that includes the time point of the current pressing of the key followed by reproduction (S24). For example, in a case where the starting time point of skip period 1 of the content data is 00 hours 15 minutes 02 seconds, the end time point of this skip period is 00 hours 15 minutes 59 seconds, and the pressing of the skip key is performed at 00 hours 15 minutes 05 seconds, the skip is performed to the end of the commercial period (00 hours, 15 minutes 59 seconds), and reproduction is started again from 00 hours 16 minutes 00 seconds.

In a case where the time point of the current pressing of the skip key is not within the skip period of the content data, an operation similar to that of step 15 (S15) through step 19 (S19) shown in Figure 2 is executed.

More specifically, the control section 8 determines whether or not the current pressing of the skip key has been performed within 15 seconds from the skip reference time point in accordance with the immediately preceding skip operation (S25). While in a case where the current pressing of the skip key has not been performed within 15 seconds from the skip reference time point, a time of twelve seconds is skipped from the time point now reproducing the content data (S26), and the time point at which reproduction is re-started after skipping is stored in the skip information memory section 8a as the new skip reference time point (S27).

In a case where the current pressing of the skip key has been performed within 15 seconds from the skip reference time point, a skip is performed for 15 seconds from this skip reference time point (S28), and the time point at which the reproduction is re-started after skipping is stored in the skip information memory section 8a as the new skip reference time point (S27).

The control section 8 determines whether or not there received an instruction to stop reproduction from the operating section 6 (S29). In a case where there received an instruction to stop reproduction, the control section 8 stops the reproduction. In a case where there received no instruction to stop reproduction, the process returns to step 22 (S22), and the process from step 22 (S22) through step 29 (S29) is repeated.

Here, the system may be constructed such that in a case where there is no pressing of any other key (reproduction stop, temporary stop, etc.) in the operating section 6 during the skip operation when the skip period is skipped as a result of the pressing of the skip key in the above-described skip operation, only the time point of the initial pressing of the skip key of the skip operation performed during the initial reproduction of the content data and the end time point of this skip period (the final skip reference time point within this skip period) are set as the starting time point and end time point of the skip period.

More specifically, as shown in Figure 4, the skip key pressing time points, reproduction starting time points and skip reference time points from the first pressing of the skip key to the fourth pressing of the skip key are stored in the skip information memory section 8a as information for skip period 1. In the reproduction of the content data from the second time onward, in a case where the skip key is pressed and any other keys are not pressed during this skip operation, the skip information for the skip period 1 in the skip information memory section 8a may be altered so that the time point of the first pressing of the skip key (00 hours 15 minutes 02 seconds) is set as the starting time point of the skip period, and the time point of the fourth re-starting of the reproduction (00 hours 15 minutes 59 seconds) is set as the end time point of the skip period.

As a result, the amount of data of skip information that corresponds to commercial periods stored in the skip information memory section 8a can be reduced, and the regions that allow storage in the skip information memory section 8a can be effectively used.

As described above, in the reproduction of the content data from the second time onward, in a case where the skip key is pressed and this pressing of the skip key is performed within the skip period based on the skip operation performed in the initial reproduction of the content data, a skip is performed for the skip period that includes the time point at which the skip key is pressed.

For example, in the reproduction of the content data for the second time, in a case where the skip key is pressed at 00 hours 15 minutes 13 seconds, skipping is performed to the end time point of skip period 1 in which this time point is included (i.e., the time point of the re-starting of reproduction by the fourth skip operation). Furthermore, in a case where the skip key is pressed at 00 hours 30 minutes 10 seconds, skipping is performed to the end point of time of skip period 2 in which this time point is included (i.e., the time point of the re-starting of reproduction in the eighth skip operation). Furthermore, in a case where the skip key is pressed at 00 hours 45 minutes 02 seconds, skipping is performed to the end time point of skip period 3 in which this time point is included (i.e., the time point of the re-starting of reproduction in the twelfth skipping operation).

Accordingly, in the reproduction of the content data from the second time onward, in a case where the skip key is pressed within the skip period based upon the skip information (skip period) in the first reproduction of the content data, skipping is performed to the end time point of the skip period that includes the time point at which the skip key was pressed. As a result, the user can skip the skip period by pressing the skip key once, so that the bothersome operation of pressing the skip key a number of times is eliminated, thus simplifying the operation.

In the above-described embodiment, it may be constructed such that reproduction is performed after automatically skipping all of the skip periods that are included in the content data and set during the initial reproduction of the content data, without pressing the skip key in the reproduction of the content data from the second time onward, by setting a "commercial automatic skip mode" using the operating section 6 prior to the starting of the reproduction of the content data from the second time onward.

Since skip information corresponding to the content data recorded in the HDD 5 is stored in the skip information memory section 8a, reproduction can be performed with the skip periods skipped even in cases where the skip key is not pressed in the reproduction of the content data from the second time onward, referring to this skip information.

For example, in a case where the commercial automatic skip mode is set in the reproduction of the content data from the second time onward, the content data is reproduced from the head time point of the content data (00 hours 00 minutes 00 seconds) to a time point immediately preceding the time point of the first pressing of the skip key (00 hours 15 minutes 02 seconds); then, the period from the time point of the first pressing of the skip key (00 hours 15 minutes 02 seconds) to the time point at which reproduction is re-started in the fourth skip operation (00 hours 16 minutes 00 seconds) is skipped, and the content data is again reproduced from 00 hours 16 minutes 01 seconds. Furthermore, the content data is reproduced up to a time point immediately preceding the time point of the fifth pressing of the skip key (00 hours 30 minutes 03 seconds); then, the period from the time point of the fifth pressing of the skip key (00 hours 30 minutes 03 seconds) to the time point at which reproduction is re-started in the eighth skip operation (00 hours 30 minutes 57 seconds) is skipped, and the content data is again reproduced from 00 hours 30 minutes 58 seconds. Furthermore, the content data is reproduced up to a point immediately preceding the time point of the ninth pressing of the skip key (00 hours 45 minutes 02 seconds); then, the period from the time point of the ninth pressing of the skip key (00 hours 45 minutes 02 seconds) to the time point at which reproduction is re-started in the twelfth skip operation (00 hours 45 minutes 59 seconds) is skipped, and the reproduction of the content data starts again from 00 hours 46 minutes 00 seconds, then the content data is reproduced until 00 hours 57 minutes 21 seconds.

Thus, in the reproduction of the content data from the second time onward, reference is made to the skip information stored in the skip information memory section 8a, the content data in the periods skipped during the first reproduction of the content data is automatically skipped, and the content data except in the periods is reproduced. As a result, when the content data is reproduced from the second time onward, the above-described bothersome operation, in which the user again confirms whether or not a commercial starts, and presses the skip key a number of times in order to skip the commercial, is eliminated.

Furthermore, in the reproduction of the content data from the second time onward, there may be cases in which a user who is different from the user that pressed the skip key for the first time reproducing of the data. In such cases, the user who is different from the user who pressed the skip key the first time may wish to view and hear the commercials included in the skip periods that were skipped in the first reproduction of the content data, or the user who previously operated the skip key may skip the program instead of skipping only the commercials as a result of accidentally pressing the skip key.

In such cases, in the content recording and reproducing apparatus of the shown embodiment, the skip information (e.g., one shown in Figure 4) stored in the skip information memory section 8a may be displayed on the display 7, so that the user can alter the time points of the skip information using the operating section 6.

For example, in Figure 4, the reproduction of the content data may be started from the time point at which reproduction starts in accordance with the third skip operation, with deleting the information relating to the fourth skip operation. Alternately, the period from "00:15:00" to "00:15:59" during which a commercial is reproduced may be skipped so that the program alone is reproduced by altering the skip key pressing time point of "00:15:02" to "00:15:00", and altering the time point at which the reproduction is started in the fifth skip operation to "00:15:59".

As a result, the content data alone can be reproduced more accurately without reproducing commercials.

In the above-described embodiment, the skip information is stored in the skip information memory section 8a provided in the control section 8. However, the present invention is not limited to this, and the skip information may be recorded in, for example, a recording device in connection with the content data.

Furthermore, in the above-described embodiment, the function of skipping commercials is described. However, the present invention is not limited only to a skip function for commercials, and the present invention may also be applied to other skip processes. For example, a part of a content data that a user dislikes may be skipped according to the present embodiments of the present invention.

In the above embodiment, content data to be reproduced is recorded in the HDD5. However, content data may be recorded in a removable medium such as optical disk (digital versatile disk, etc.). In this case, the content recording and reproducing apparatus includes a disk drive such as DVD drive, and content data and even more skip information may be recorded in a disk via the disk drive.

In the above embodiment, when the skip key is pressed successively within a predetermined time, e.g., 15 seconds, skipping is executed continuously. However, when the skip key is pressed successively within a short time, e.g., 3 or 5 seconds, skipping may be carried out for a time period in proportion to the times of pressing the skip key. In this case, for example, when the skip key is pressed twice within 3seconds, skipping of twice skip time (e.g., 30 seconds, twice of 15 seconds) may be executed.

While the preferred embodiments of the present invention have been illustrated in detail, it should be apparent that modifications and adaptations to those embodiments may occur to one skilled in the art without departing from the scope of the present invention as set forth in the following claims.

## Claims

1. A content recording and reproducing apparatus comprising a receiving section (1) which receives content data transmitted via wire or wireless transmission; a recording and reproducing section (5) which records the content data received by the receiving section (1) on a recording medium and reproduces the content data recorded on the recording medium; an operating section (6) which has keys allowing a user to input instructions for recording and reproducing of content data and for skipping during reproducing the content data; and a control section (8) that controls recording and reproducing of the content data in the recording and reproducing section (5) based upon instructions from the operating section (6), **characterized in that**
the control section (8) includes:
a skip information memory section (8a) which stores a skip reference time point indicating a time point at which the recording and reproducing section (5) re-starts reproduction of the content data after skipping; and
a skip amount setting section (8b) which sets an amount of skipping based upon a time point at which the key for skipping is pressed, the skip amount setting section (8b) executing a skip for a first skip time from the skip reference time point when the key for skipping is pressed within a predetermined time from the skip reference time point, and a skip for a second skip time shorter than the first skip time from the skip reference time point when the key for skipping is pressed out of the predetermined time from the skip reference time point.

2. The content recording and reproducing apparatus according to claim 1, wherein
the skip information memory section (8a) further stores a skip period which indicates a period within which skipping is continuously executed for the content data in accordance with successive pressing of the skip key; and
in a case where the recording and reproducing section (5) reproduces a content data once reproduced, the skip amount setting section (8b) executes a skip for whole of the skip period stored in the skip information memory section (8a) when the key for skipping is pressed at least one time within the skip period.

3. The content recording and reproducing apparatus according to claim 1, wherein
the skip information memory section (8a) further stores a skip period which indicates a period within which skipping is continuously executed for the content data in accordance with successive pressing of the skip key; and
in a case where the recording and reproducing section (5) reproduces a content data once reproduced, the skip amount setting section (8b) executes a skip for whole of the skip period stored in the skip information memory section (8a) automatically.

4. A content recording and reproducing apparatus comprising: a recording and reproducing section (5) which records and reproduces content data; an operating section (6) which has keys allowing a user to input instructions for recording and reproducing of content data and for skipping during reproducing the content data; and a control section (8) that controls recording and reproducing of the content data in the recording and reproducing section (5) based upon instructions from the operating section (6), **characterized in that**
the control section (8) executes a second skipping based on a second skip instruction that is inputted within a predetermined time from a time at which the recording and reproducing section re-starts reproduction of the content data after a first skipping based on a first skip instruction.

5. The content recording and reproducing apparatus according to Claim 4, wherein
the control section (8) executes skipping shorter than the second skipping based on the second skip instruction that is inputted out of the predetermined time from the time at which the recording and reproducing section (5) re-starts reproduction of the content data after a first skipping based on a first skip instruction.

6. The content recording and reproducing apparatus according to claim 4 or 5, wherein
the control section (8) includes a skip information memory (8a) stores a skip period which indicates a period within which skipping is continuously executed for the content data in accordance with successive skip instructions, and
in a case where the recording and reproducing section (5) reproduces a content data once reproduced, the control section (8) executes a skip for whole of the skip period stored in the skip information memory section (8a) when the skip instruction is inputted at least one time within the skip period.

7. The content recording and reproducing apparatus according to claim 4 or 5, wherein
the control section (8) includes a skip information memory (8a) stores a skip period which indicates a period within which skipping is continuously executed for the content data in accordance with successive skip instructions, and
in a case where the recording and reproducing section (5) reproduces a content data once reproduced, the control section (8) executes a skip for whole of the skip period stored in the skip information memory (8a) section automatically.

8. The content recording and reproducing apparatus according to claim 6 or 7, wherein
the skip information memory (8a) stores at least a start time point and an end time point.

9. The content recording and reproducing apparatus according to claim 6 or 7, wherein
the skip period stored in the skip information memory (8a) is optionally edited by a user.

10. A content reproducing method for reproducing a content data, **characterized by** further including:
skipping a first skip time based on a first skip instruction received;
re-starting reproduction of the content data after the first skip time; and
skipping a second skip time, when received a second instruction within a predetermined period from a time at which the reproduction is re-started.

11. The reproducing method according to claim 10, wherein
the first skip time and the second skip time are equal.

12. The reproducing method according to claim 10 or 11, including
skipping a skip time shorter than the second skip time in stead of skipping the second skip time, when received a second instruction within a predetermined period from a time at which the reproduction is re-started.

13. The reproducing method according to any one of claims 10 to 12, further including
storing a skip period which indicates a period within which skipping is continuously executed for the content data in accordance with successive skip instructions, and
skipping whole of the skip period stored when the skip instruction is inputted at least one time within the skip period, in case of reproducing a content data once reproduced.

14. The reproducing method according to any one of claims 10 to 12, including
storing a skip period which indicates a period within which skipping is continuously executed for the content data in accordance with successive skip instructions, and
skipping whole of the skip period stored automatically, in case of reproducing a content data once reproduced.

15. The content recording and reproducing apparatus according to claim 13 or 14, wherein
storing at least a start time point and an end time point of the skip period in the storing.

16. The content recording and reproducing apparatus according to claim 13 or 14, including
allowing a user to edit the skip period stored.
